# EUROPÄISCHE PATENTSCHRIFT

(11) **EP 1 987 875 B1**
(45) Veröffentlichungstag und Bekanntmachung des Hinweises auf die Patenterteilung: **27.06.2012**
(21) Anmeldenummer: 08013803.5
(22) Anmeldetag: 23.05.2002
(51) Int. Cl.: B01J 2/00, B01J 2/16, C11D 17/00, C01B 15/10, C11D 11/00

(54) **Verfahren zum Coating von körnigen und pulverförmigen Materialen**
Method for coating granular and powder-form materials
Procédé d'enrobage de matériaux sous forme de graines et de poudre

(30) Priorität: 26.06.2001 DE 10130334
(43) Veröffentlichungstag der Anmeldung: 05.11.2008
(62) Teilanmeldung aus: 02011325.4
(73) Patentinhaber: Glatt Ingenieurtechnik GmbH, D-99427 Weimar (DE)
(72) Erfinder: Rümpler, Karlheinz, Dr., 99425 Weimar (DE); Jacob, Michael, 99427 Weimar (DE); Waskow, Mike, 99423 Weimar (DE)
(74) Vertreter: Maucher, Wolfgang

(56) Entgegenhaltungen:
- EP-A- 0 332 929
- EP-A- 0 938 922
- WO-A-95/15291
- WO-A-98/53907
- DE-A- 2 417 572
- DE-A- 4 324 104
- DE-A- 4 338 400
- DE-A- 19 544 293
- GB-A- 1 033 484
- GB-A- 1 508 777
- US-A- 3 042 526
- US-A- 5 211 985
- US-A- 6 113 805
- US-B1- 6 239 095

## Beschreibung

Die Erfindung betrifft ein Verfahren zum Coating einer Waschmittelkomponente bestehend aus körnigem bis pulverförmigem Natriumpercarbonat, dem Natriumsulfat mit oder ohne weitere Zusätze gemäß den Ansprüchen als Coatingmaterial in einer Wirbelschicht auf die Materialteilchen aufgesprüht wird.

Es ist bekannt, dass zur Beeinflussung der Eigenschaften von körnigen bis pulverförmigen Materialien diese mit einer Schutzschicht umgeben werden. Diese Schutzschichten haben die Aufgabe, die Lagerstabilität der behandelten Materialien zu erhöhen, eine chemische Veränderung der Stoffe zu verhindern oder Eigenschaften wie Geruch, Geschmack und Klebrigkeit zu maskieren und die Benetzbarkeit zu beeinflussen. Durch diese Schutzschicht ist es auch möglich, den Abrieb des Materials erheblich zu reduzieren. Beim Aufbringen der Schutzschicht muss beachtet werden, das eine gesteuerte Freisetzung der im umhüllten Material vorhandenen Komponenten bei entsprechendem Bedarf in einem bestimmten Zeitraum eingehalten wird. Durch den Einsatz von Enzymen, Katalysatoren, waschaktiven Substanzen, Metallen und Metallverbindungen wird eine funktionelle Oberfläche der Produktpartikel erzielt.

Aus der Pharmaindustrie ist ein Coating von körnigen bis pulverförmigen Materialien bekannt. Bedingung bei den in der Pharmaindustrie angewendeten Verfahren ist, dass jedes Materialteilchen gleichen Verweilzeiten und damit gleichen Bedingungen für den Coatingprozess ausgesetzt werden muss. Alle Materialteilchen werden mit gleichen Coatingteilen versehen, und es werden geschlossene Coatingschichten auf die Teilchen aufgetragen. Um den hohen Qualitätsmerkmalen gerecht zu werden, erfolgt das Coating von pharmazeutischen Produkten in Chargenbetrieb in einer Wirbelschicht oder in einer Drehtrommel. Dabei können der Wirbelschicht beziehungsweise der Drehtrommel nur geringe Mengen des zu behandelnden Materials aufgegeben werden, um die entprechenden Qualitätsmerkmale einhalten zu können.

Aus der DE 43 38 400 A und der DE 195 44 293 A sind bereits Verfahren zum Coating von körnigem bis pulverförmigem Natriumpercarbonat bekannt, bei denen beispielsweise eine Natriumsulfat enthaltende Lösung gegebenenfalls mit weiteren Hilfsstoffen als Coatingmaterial in einer Wirbelschicht auf die Materialteilchen aufgetragen und durch Prozessluft getrocknet und verfestigt wird. Während dabei in der DE 43 38 400 A eine vollständige Umhüllung mit einer Natriumpercarbonat aufweisenden Mutterlauge und einer darauf basierenden Lösung vorgesehen ist, wird in der DE 195 44 293 A eine ein- oder mehrschichtige Umhüllung der Natriumpercarbonatpartikel vorgeschlagen.

Nachteilig an diesen vorbekannten Verfahren ist, dass sie wegen des Chargenbetriebs nur für kleine Produktmengen geeignet sind und Coatingqualitäten erreichen, die bei Massenprodukten nicht notwendig und kostenmäßig nicht vertretbar sind.

Die Aufgabe der Erfindung besteht darin, ein Verfahren zum Coating einer Waschmittelkomponente bestehend aus körnigem bis pulverförmigem Natriumpercarbonat, dem Natriumsulfat als Coatingmaterial in einer Wirbelschicht auf die Materialteilchen aufgesprüht wird, zu entwickeln, das kostengünstig einsetzbar ist und bei dem das Coatingprodukt kontinuierlich und in einer für Massenprodukte erforderlichen Qualität und Durchsatzmenge herstellbar ist.

Die Aufgabe wird erfindungsgemäß mit den Merkmalen des Anspruches 1 gelöst. Vorteilhafte Ausgestaltungen des Verfahrens sind in den Unteransprüchen angegeben. Die Ansprüche werden hier durch Bezugnahme aufgenommen.

Das Coating einer aus körnigem bis pulverförmigem Natriumpercarbonat bestehenden Waschmittelkomponente erfolgt in einer kontinuierlich betriebenen Wirbelschicht, bei dem das Coatingmaterial kontinuierlich in wenigstens zwei unterschiedlichen Bereichen auf die in der Wirbelschicht befindliche Materialschicht aufgetragen wird. Dabei wird das Coatingmaterial in Form von Lösungen in Form einer Coatingmatrix, bei dem keine vollständige Umhüllung der Materialteilchen mit Coatingmaterial erfolgt, aufgetragen. Dadurch ist es möglich, kostengünstig eine aus körnigem bis pulverförmigem Natriumpercarbonat bestehende Waschmittelkomponente mit einer entsprechenden Umhüllung von Coatingmaterial zu versehen. Die mit einer Coatingmatrix versehenen Materialteilchen weisen eine funktionelle Oberfläche auf und erfüllen somit die Anforderungen entsprechend ihrer Aufgabenstellung wie Erhöhung der Lagerstabilität, Verhinderung von Veränderungen der chemischen Eigenschaften der umhüllten Materialien oder die Möglichkeit, die Benetzbarkeit der behandelten Materialien zu beeinflussen.

Die Erfindung wird anhand von Ausführungsbeispielen näher erläutert. In der dazugehörigen Zeichnung ist ein Querschnitt durch eine Wirbelschichtanlage zum Coating einer Waschmittelkomponente bestehend aus körnigem bis pulverförmigem Natriumpercarbonat, dem Natriumsulfat als Coatingmaterial in einer Wirbelschicht auf die Materialteilchen aufgesprüht wird, schematisch dargestellt.

Das Verfahren zum Coating der aus körnigem bis pulverförmigem Natriumpercarbonat bestehenden Waschmittelkomponente erfolgt in einem kontinuierlich arbeitenden Wirbelschichtapparat. Das Ausgangsmaterial mit Körnung kleiner 1 mm wird über den Feststoffeintrag 2 und einer Zellenradschleuse 12 einem ersten Bereich des Wirbelraums II der Wirbelschicht 9 zugeführt. Entsprechend den spezifischen Materialbedingungen der zu coatenden Massenprodukte durchläuft das Material unterschiedliche Bereiche der Wirbelschicht 9. Unterschiedliche Prozesse wie Aufheizen, Agglomerieren, Coating, Trocknen und Kühlen werden in einer entsprechenden Kombination, die durch die jeweilige Materialeigenschaft bestimmt wird, durchgeführt. Dem Bereich der Wirbelschicht 9 wird Pressluft 1 mit unterschiedlichen Temperaturen über die jeweiligen Zuluftkammern 10 und einem Luftverteilungsboden 11 zugeführt. Dabei bilden die Zuluftkammern 10 und der Luftverteilungsboden 11, als obere Begrenzung, den Anströmteil I, in dem die Prozessluft 1 in den Wirbelraum II eingebracht, verteilt und vergleichmäßigt wird. Das Coatingmaterial wird kontinuierlich in wenigstens zwei unterschiedlichen Bereichen durch ein Sprühsystem 8 im statistischen Mittel auf das in der Wirbelschicht 9 befindliche zu coatende Material aufgetragen. Das Coatingmaterial wird in Form von Lösungen auf die Materialteilchen durch das Sprühsystem 8 aufgetragen. Die Eindüsung des Coatingmaterial durch das Sprühsystem 8 kann von oben auf die Materialschicht oder von unten in die Materialschicht oder durch geneigt angeordnete Ein- oder Mehrstoffdüsen erfolgen. Die Temperatur der Wirbelschicht 9 zugeführten Zuluft (Prozessluft 1) ist materialabhängig und liegt für die einzelnen Coatingstufen in den Bereichen gemäß den Ansprüchen. Durch die über die Prozessluft 1 eingebrachte Energie erfolgt eine Trocknung und Verfestigung der sich im Bedüsungsbereich auf den Materialteilchen bildenden Coatingschichten. Dabei bildet das Coatingmaterial an den Materialteilchen eine Coatingmatrix, bei dem keine vollständige Umhüllung der Materialteilchen mit Coatingmaterial erfolgt.

Oberhalb des Wirbelraums II schließt sich die Expansionszone III an, in der die Strömungsgeschwindigkeit der Prozessluft 1 durch Querschnittserweiterungen verringert wird. Die Seitenwände der Expansionszone III weisen eine starke Neigung von 15-45° zur Senkrechten auf, so dass eine Querschnittserweiterung bis zum anschließenden Filtersystem IV erfolgt. Durch die Verringerung der Strömungsgeschwindigkeit der Prozessluft 1 erfolgt eine Vorabscheidung von aus dem Wirbelraum II mitgerissenen Materialteilchen, die wieder in den Wirbelraum rückgeführt werden.

An die Expansionszone III schließt sich ein integriertes Filtersystem IV, zur Entstaubung der Prozessluft 1 und zur gleichzeitigen Rückführung des Staubes in die darunterliegende Wirbelschicht 9, an. Das Filtersystem IV besteht aus Filterelementen 7, die mechanisch durch die Filterabreinigung 6 und/oder durch Druckluft 5 impulsmäßig gereinigt werden können. Der Einsatz anderer bekannter Filterelemente ist möglich. Durch das integrierte Filtersystem IV wird ein Kontakt mit den Stäuben vermieden und die Staubexplosionsgefährdung auf den Innenraum des Wirbelschichtapparates reduziert.

Die gereinigte Prozessluft verlässt das System als Abluft 4, während das Fertigprodukt ebenfalls über eine Zellenradschleuse 12 als Druckabschluss und über den Produktaustrag 3 aus dem System ausgetragen wird.

Der Anlage können weitere Ausrüstungsteile, beispielsweise zur Explosionsunterdrückung/-entlastung oder zur Unterstützung der Feststoffbewegung z.B. durch Vibrationseinrichtungen, hinzuge-fügt werden.

Nachfolgend wird das erfindungsgemäße Verfahren an konkreten Beispielen erläutert.

### Beispiel 1:

Eine Waschmittelkomponente Natriumpercarbonat mit Körnung kleiner 1 mm wird gecoatet in einer Wirbelschicht mit vier Kammern im Anströmbereich mit einer Wirbelbodenfläche von 0,2m², dabei werden insgesamt 5% Coatingmaterial (Trockenstoff) aufgetragen, in einer Kammer ein Natriumsulfat, Wasserglas und eine organische Komponente, in einer weiteren Kammer die Mischung aus Natriumsulfat und Natriumcarbonat.
Der Massendurchsatz an Fertigprodukt betrug 100 kg/h.

| | |
|---|---|
| 1. Kammer | Coating 1 |
| | Zulufttemperatur 190°C |
| | Schichttemperatur 60°C |
| | Sprühmedium 15%-ige Coatinglösung |
| | Coatingmenge 0,6% bezogen auf Trockenstoff |
| 2. Kammer | Coating 2 |
| | Zulufttemperatur 190°C |
| | Schichttemperatur 60°C |
| | Sprühmedium 20%-ige Coatinglösung |
| 3. Kammer | Coating 3 |
| | Zulufttemperatur 190°C |
| | Schichttemperatur 60°C |
| | Sprühmedium 20%-ige Coatinglösung |
| | Coatingmenge 4,4% bezogen auf Trockenstoff von |
| | Coating 2 und 3 |
| 4. Kammer | Nachtrocknung |
| | Zulufttemperatur 75°C |
| Aufteilung der Wirbelfläche: | |
| | 25% Coating 1 |
| | 25% Coating 2 |
| | 25% Coating 3 |
| | 25% Trocknung |

### Beispiel 2, (nicht zur erfindung gehörend)

Natriumpercarbonat mit Körnung kleiner 1 mm wird gecoatet in einer Wirbelschicht mit vier Kammern im Anströmbereich mit einer Wirbelbodenfläche von 0,2 m², dabei werden insgesamt 10% Coatingmaterial (Trockenstoff) Natriumsulfat aufgetragen. Der Massendurchsatz an Fertigprodukt betrug 30 kg/h.

| | |
|---|---|
| 1. Kammer | Coating 1 |
| | Zulufttemperatur 125°C |
| | Schichttemperatur 60°C |
| | Sprühmedium 15%-ige Coatinglösung |
| 2. Kammer | Coating 2 |
| | Zulufttemperatur 125°C |
| | Schichttemperatur 60°C |
| | Sprühmedium 15%-ige Coatinglösung |
| 3. Kammer | Coating 3 |
| | Zulufttemperatur 125°C |
| | Schichttemperatur 60°C |
| | Sprühmedium 15%-ige Coatinglösung |
| 4. Kammer | Nachtrocknung |
| | Zulufttemperatur 50°C |
| Aufteilung der Wirbelfläche: | |
| | 25% Coating 1 |
| | 25% Coating 2 |
| | 25% Coating 3 |
| | 25% Trocknung |

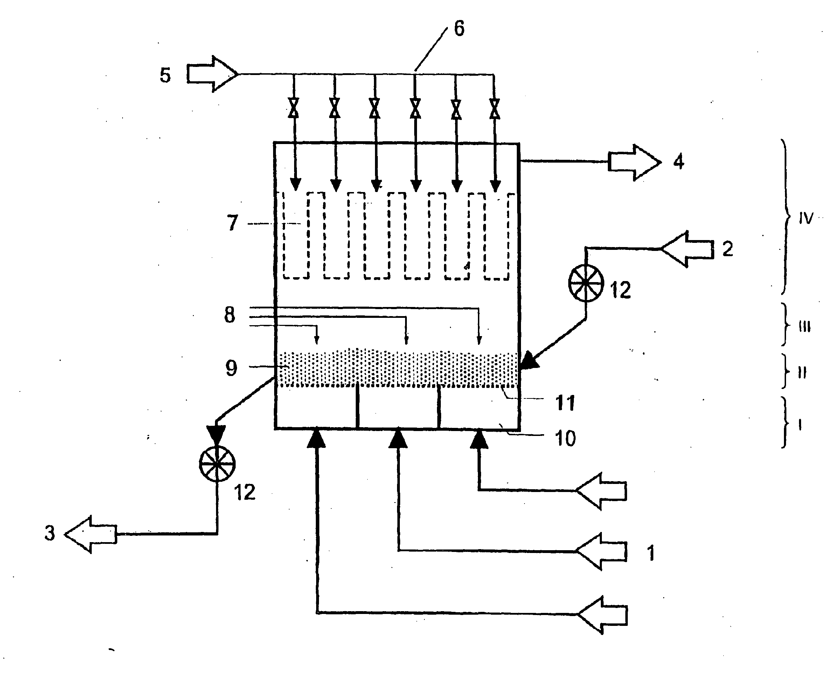

## Patentansprüche

1. Verfahren zum Coating einer Waschmittelkomponente bestehend aus körnigem bis pulverförmigem Natriumpercarbonat, dem Natriumsulfat, Wasserglas und eine organische Komponente als Coatingmaterial in einer Wirbelschicht auf die Materialteilchen aufgesprüht werden, **dadurch gekennzeichnet, dass** das Coatingmaterial auf das körnige bis pulverförmige Natriumpercarbonat in Form einer Coatingmatrix, wobei keine vollständige Umhüllung des Natriumpercarbonats mit Coatingmaterial erfolgt, aufgetragen und durch Prozessluft getrocknet und verfestigt wird, dass das Coatingmaterial kontinuierlich in unterschiedlichen Bereichen auf die Materialschicht einer kontinuierlich betriebenen Wirbelschicht aufgetragen wird, dass dem in der Wirbelschicht befindlichen körnigen Natriumpercarbonat, mit einer Körnung kleiner als 1 mm, an drei unterschiedlichen Bereichen der Wirbelschicht das Coatingmaterial zugeführt wird, dass der Wirbelschicht in einem ersten Bereich eine 10-20%-ige Coatinglösung bestehend aus Natriumsulfat, Wasserglas und einer organischen Komponente mit einer Coatingmaterialmenge von 0,3-1 % bezogen auf den Trockenstoff zugeführt wird, dass der Wirbelschicht in einem zweiten und dritten Bereich eine 15-25%-ige Coatinglösung, bestehend aus Natriumsulfat und Natriumcarbonat, mit einer Coatingmaterialmenge von 4-5% bezogen auf den Trockenstoff zugeführt wird, dass die Materialschichttemperatur in den drei Bereichen der Coatingmaterialzuführung 40-80°C beträgt, dass die Temperatur der zugeführten Zuluft im Bereich der Coatingmaterialzuführung 160-220°C beträgt, dass das gecoatete Natriumpercarbonat in einem weiteren Bereich der Wirbelschicht bei Zulufttemperaturen von 60-80°C nachgetrocknet wird, und dass das Endprodukt kontinuierlich aus der Wirbelschicht ausgetragen wird.

2. Verfahren nach Anspruch 1, **dadurch gekennzeichnet, dass** die Materialschichttemperatur in den vorzugsweise drei Bereichen der Coatingmaterialzuführung 60°C beträgt.

3. Verfahren nach Anspruch 1 oder 2, **dadurch gekennzeichnet, dass** die Temperatur der zugeführten Zuluft im Bereich der Coatingmaterialzuführung 190°C beträgt und das Nachtrocknen des Natriumpercarbonats bei 75 °C erfolgt.

4. Verfahren nach Anspruch 2, **dadurch gekennzeichnet, dass** die Temperatur der zugeführten Zuluft im Bereich der Coatingmaterialzuführung 125°C beträgt und das Nachtrocknen des Natriumpercarbonats bei 50 °C erfolgt.

5. Verfahren nach einem der Ansprüche 1 bis 2, **dadurch gekennzeichnet, dass** das gecoatete Natriumpercarbonat in dem weiteren Bereich der Wirbelschicht bei Zulufttemperaturen von 75°C nachgetrocknet wird.

6. Verfahren nach einem der Ansprüche 1 bis 5, **dadurch gekennzeichnet, dass** die einzelnen Bereiche der Wirbelschicht, in der entsprechend den Prozessbedingungen ein Aufheizen, Agglomerieren, Coaten, Trocknen oder Kühlen erfolgt, annähernd gleich groß ausgebildet sind.

## Claims

1. Method of coating a detergent component consisting of granular to powder-form sodium percarbonate, in which sodium sulphate, waterglass and an organic component are sprayed as coating material onto the particles of material in a fluidised bed, **characterised in that** the coating material is applied to the granular to powder-form sodium percarbonate in the form of a coating matrix, whereby the sodium percarbonate is not totally encased in coating material, and the coating material is dried and solidified by process air, the coating material is applied continuously in different areas to the material layer of a continuously operating fluidised bed, the coating material is supplied to the granular sodium percarbonate contained in the fluidised bed, having a particle size of less than 1 mm, at three different areas of the fluidised bed, a 10-20% coating solution consisting of sodium sulphate, waterglass and an organic component, having an amount of coating material of 0.3 to 1% based on the dry matter, is supplied to the fluidised bed in a first region, a 15-25% coating solution consisting of sodium sulphate and sodium carbonate, having an amount of coating material of 4-5% based on the dry matter, is supplied to the fluidised bed in a second and third region, the temperature of the material layer in the three regions of the supply of coating material is 40-80°C, the temperature of the supply air fed in is 160-220°C in the region of the supply of coating material, the coated sodium percarbonate in another region of the fluidised bed is after-dried at supply air temperatures of 60-80°C, and the end product is continuously expelled from the fluidised bed.

2. Method according to claim 1, **characterised in that** the temperature of the material layer in the preferably three regions of the supply of coating material is 60°C.

3. Method according to claim 1 or 2, **characterised in that** the temperature of the air supplied in the region of the supply of coating material is 190°C and the after-drying of the sodium percarbonate is carried out at 75°C.

4. Method according to claim 2, **characterised in that** the temperature of the air supplied in the region of the supply of coating material is 125°C and the after-drying of the sodium percarbonate is carried out at 50°C.

5. Method according to one of claims 1 to 2, **characterised in that** the coated sodium percarbonate in the further region of the fluidised bed is after-dried at supply air temperatures of 75°C.

6. Method according to one of claims 1 to 5, **characterised in that** the individual regions of the fluidised bed in which heating, agglomeration, coating, drying or cooling are carried out according to the process conditions are of approximately the same size.

## Revendications

1. Procédé d'enrobage d'un composant d'agent de lavage constitué de percarbonate de sodium granuleux à pulvérulent, sachant que du sulfate de sodium, un silicate et un composant organique sont pulvérisés comme matériau d'enrobage sur les particules du matériau dans un lit fluidisé, **caractérisé en ce que** le matériau d'enrobage est pulvérisé sur le percarbonate de sodium granuleux à pulvérulent sous la forme d'une matrice d'enrobage, le percarbonate de sodium n'étant pas totalement enveloppé par le matériau d'enrobage, et est séché et solidifié par de l'air de traitement, **en ce que** le matériau d'enrobage est appliqué en continu dans différentes zones sur la couche de matériau d'un lit fluidisé exploité en continu, **en ce que** le matériau d'enrobage est apporté au percarbonate de sodium granuleux se trouvant dans le lit fluidisé, d'une granulation inférieure à 1 mm, dans trois zones différentes du lit fluidisé, **en ce qu'**une solution d'enrobage à 10-20%, constituée de sulfate de sodium, d'un silicate et d'un composant organique avec une quantité de matériau d'enrobage de 0,3 à 1% relativement à la matière sèche, est apportée au lit fluidisé dans une première zone, **en ce qu'**une solution d'enrobage à 15-25%, constituée de sulfate de sodium et de carbonate de sodium avec une quantité de matériau d'enrobage de 4 à 5% relativement à la matière sèche, est apportée au lit fluidisé dans une deuxième zone et dans une troisième zone, **en ce que** la température de la couche de matériau dans les trois zones de l'apport de matériau d'enrobage est égale à 40-80°C, **en ce que** la température de l'air d'alimentation apporté dans la région de l'apport de matériau d'enrobage est égale à 160-220°C, **en ce que** le percarbonate de sodium enrobé est, dans une zone supplémentaire du lit fluidisé, soumis à un séchage final à des températures d'air d'alimentation de 60-80°C, et **en ce que** le produit final est évacué en continu du lit fluidisé.

2. Procédé selon la revendication 1, **caractérisé en ce que** la température de la couche de matériau dans les - de préférence - trois zones de l'apport de matériau d'enrobage est égale à 60°C.

3. Procédé selon la revendication 1 ou 2, **caractérisé en ce que** la température de l'air d'alimentation apporté dans la région de l'apport de matériau d'enrobage est égale à 190°C, et le séchage final du percarbonate de sodium s'effectue à 75°C.

4. Procédé selon la revendication 2, **caractérisé en ce que** la température de l'air d'alimentation apporté dans la région de l'apport de matériau d'enrobage est égale à 125°C, et le séchage final du percarbonate de sodium s'effectue à 50°C.

5. Procédé selon la revendication 1 ou 2, **caractérisé en ce que** le percarbonate de sodium enrobé est, dans la zone supplémentaire du lit fluidisé, soumis à un séchage final à des températures d'air d'alimentation de 75°C.

6. Procédé selon l'une des revendications 1 à 5, **caractérisé en ce que** les différentes zones du lit fluidisé, dans lesquelles ont lieu conformément aux conditions de traitement un chauffage, une agglomération, un enrobage, un séchage ou un refroidissement, sont réalisées approximativement de même taille.
